# EUROPEAN PATENT APPLICATION

(11) **EP 4 717 740 A1**
(43) Date of publication of application: **01.04.2026**
(21) Application number: 25200960.0
(22) Date of filing: 09.09.2025
(51) Int. Cl.: C09D 11/107, C09D 11/326, C09D 11/322, C09D 11/38

(54) **INKJET INK**

(30) Priority: 26.09.2024 JP 2024167721
(71) Applicant: KYOCERA Document Solutions Inc., Osaka-shi, Osaka 540-8585 (JP)
(72) Inventor: OZAWA, Noriaki, Osaka-shi, Osaka 540-8585 (JP)
(74) Representative: Viering, Jentschura & Partner mbB Patent- und Rechtsanwälte

(57) **Abstract**

An inkjet ink includes: a pigment; a water-soluble moisturizing agent having a log Kow of 0 or more; a benzylmethacrylate/methacrylic acid copolymer having a weight average molecular weight of 10,000 or more and 30,000 or less and a molecular weight distribution of 2.2 or more and 5.0 or less; and water.

## Description

### Field

The present disclosure relates to an inkjet ink.

### Background

Japanese Patent No. 4330262, Japanese Patent Application Laid-open No. 2002-088287, and Japanese Patent Application Laid-open No. 2011-140630 disclose an inkjet ink for recording an image on a recording medium such as paper. The inkjet ink is desired to have high dispersion stability for maintaining the dispersed state of pigments in a solvent. Meanwhile, the inkjet ink is desired to have high image density for recording a clear image with high visibility on a recording medium.

### Summary

According to an embodiment of the present disclosure, there is provided an inkjet ink, including: a pigment; a water-soluble moisturizing agent having a log Kow of 0 or more; a benzylmethacrylate/methacrylic acid copolymer having a weight average molecular weight of 10,000 or more and 30,000 or less and a molecular weight distribution of 2.2 or more and 5.0 or less; and water.

### Detailed Description

In the inkjet ink, it is favorable that pigments are agglomerated on a recording medium for improving the image density of an image to be recorded on the recording medium. That is, in the inkjet ink, opposing pigment behavior is desired in the solvent and on the recording medium in order to achieve both dispersion stability and image density simultaneously.

In view of the circumstances as described above, it is an object of the present disclosure to provide an inkjet ink capable of achieving both dispersion stability and image density simultaneously.

An embodiment of the present disclosure will be described.

### [Configuration of ink]

### (Schematic configuration)

An inkjet ink according to an embodiment of the present disclosure (hereinafter, referred to simply as an "ink") includes a pigment a, a water-soluble moisturizing agent b, a pigment dispersion resin c, and water. The ink according to this embodiment is a water-based ink that is ejected from a recording head of an inkjet recording apparatus onto a recording medium to record an image on the recording medium. Examples of the recording medium on which an image is recorded by the ink according to this embodiment include plain paper, copy paper, recycled paper, thin paper, thick paper, glossy paper, and OHP.

In the ink according to this embodiment, by using the water-soluble moisturizing agent b having a specific configuration and the pigment dispersion resin c having a specific configuration in combination, it is possible to achieve both dispersion stability and image density simultaneously. Details of each component of the ink according to this embodiment will be described below.

### (Pigment a)

The ink according to this embodiment includes the pigment a as a coloring agent from the viewpoints of color mixing prevention and improvement in water resistance in images recorded on the recording medium. The pigment a may be either an inorganic pigment or an organic pigment. Further, as the pigment a, these may be combined with an extender pigment as necessary.

Specific examples of the inorganic pigment that can be used in the ink according to this embodiment include carbon black and a metal oxide. In particular, in the case of a black ink, carbon black is favorable. Examples of the carbon black include furnace black, thermal lamp black, acetylene black, and channel black.

Specific examples of the organic pigment that can be used in the ink according to this embodiment include an azo pigment, a diazo pigment, a phthalocyanine pigment, a quinacridone pigment, an isoindolinone pigment, a dioxazine pigment, a perylene pigment, a perinone pigment, a thioindigo pigment, an anthraquinone pigment, and a quinophthalone pigment.

In the ink according to this embodiment, the hue is not particularly limited, and a colored pigment of any of colors such as yellow, magenta, cyan, blue, red, orange, and green can be used. Favorable specific examples of the colored pigment include C.I. Pigment Yellow, C.I. Pigment Red, C.I. Pigment Orange, C.I. Pigment Violet, C.I. Pigment Blue, and C.I. Pigment Green. The ink according to this embodiment can use one or two or more selected from these colored pigments as the pigment a.

### (Water-soluble moisturizing agent b)

In the ink according to this embodiment, the water-soluble moisturizing agent b having relatively high hydrophobicity is blended. As a result, in the ink according to this embodiment, the pigment a is more likely to be agglomerated on the recording medium. As a result, in the ink according to this embodiment, high image density on the recording medium is achieved. That is, it is possible to record a clear image with high visibility on the recording medium. The water-soluble moisturizing agent b has a log Kow of 0 or more from the viewpoint of achieving high image density on the recording medium. Further, the water-soluble moisturizing agent b favorably has a log Kow of -2.0 or less from the viewpoint of ensuring solubility in water. The log Kow is a water/octanol coefficient. The log Kow values in the present disclosure are values calculated using Hansen Solubility Parameter in Practice (HSPiP) software.

In the ink according to this embodiment, the content of the water-soluble moisturizing agent b is favorably 4.0 mass% or more in order to sufficiently achieve the above effect of the water-soluble moisturizing agent b. Further, in the ink according to this embodiment, the content of the water-soluble moisturizing agent b is favorably 40 mass% or less in order to achieve high dispersion stability.

### (Pigment dispersion resin c)

In the ink according to this embodiment, the pigment dispersion resin c is blended as a dispersant that is adsorbed on the surface of the pigment a to enhance the dispersibility of the pigment a in the solvent. In the ink according to this embodiment, fine particles of a benzylmethacrylate/methacrylic acid copolymer are used as the pigment dispersion resin c. In the pigment dispersion resin c, benzylmethacrylate that is a hydrophobic segment has the effect of improving the dispersion stability of the pigment a and methacrylic acid that is a hydrophilic segment has the effect of improving image density.

Further, the pigment dispersion resin c has a weight average molecular weight of 10,000 or more and 30,000 or less and a molecular weight distribution of 2.2 or more and 5.0 or less. This allows the pigment dispersion resin c to impart different functions to molecules having a relatively large molecular weight and molecules having a relatively small molecular weight. That is, the molecules having a relatively large molecular weight of the pigment dispersion resin c have strong adsorption force on the pigment a and the adsorbed state on the pigment is less likely to be impaired even in the water-soluble moisturizing agent b having relatively high hydrophobicity, thereby exhibiting the function of maintaining the dispersibility of the pigment in the solvent. Further, the molecules having a relatively small molecular weight of the pigment dispersion resin c have relatively weak adsorption force on the pigment and thus are free from the pigment on the recording medium, thereby exhibiting the function of enhancing the agglomeration of the pigment. Note that in this embodiment, the weight average molecular weight and the molecular weight distribution are measured using gel permeation chromatography ("HLC-8020GPC" manufactured by TOSOH CORPORATION) in accordance with the following conditions.
·Column: "TSKgel SuperMultiporeHZ-H" (semi-microcolumn of 4.6 mm I.D. × 15 cm) manufactured by TOSOH CORPORATION
·Number of columns: 3
·Eluent: tetrahydrofuran
·Flow rate: 0.35 mL/min
·Sample injection amount: 10 µL
·Measurement temperature: 40°C
·Detector: IR detector

Note that the calibration curve is created by selecting seven types, i.e., F-40, F-20, F-4, F-1, A-5000, A-2500, and A-1000, and n-propylbenzene from TSK gel standard polystyrene manufactured by TOSOH CORPORATION.

In the ink according to this embodiment, the content of the pigment dispersion resin c is favorably 3.0 mass% or more in order to sufficiently achieve the above effect of the pigment dispersion resin c. Further, in the ink according to this embodiment, the content of the pigment dispersion resin c is 4.0 mass% or less in order to achieve high dispersion stability.

### (Water)

In the ink according to this embodiment, ion exchanged water, purified water, distilled water, or the like can be used as water. In the ink according to this embodiment, the content of water is favorably 40 mass% or more and 60 mass% or less from the viewpoints of dryness and ejection reliability.

### (Other components)

In the ink according to this embodiment, components other than the above may be blended as necessary. For example, in the ink according to this embodiment, a surfactant may be blended. The surfactant has the effect of enhancing the wettability of the ink on a recording medium and the effect of enhancing the compatibility and dispersion stability of each component included in the ink. Examples of the surfactant blended in the ink according to this embodiment include an anionic surfactant, a cationic surfactant, a non-ionic surfactant, and an amphoteric surfactant. The surfactant is favorably a non-ionic surfactant. The non-ionic surfactant is favorably a surfactant having an acetylene bond, more favorably a surfactant having an acetylene glycol structure or an acetylene alcohol structure.

Further, in the ink according to this embodiment, various additives such as a penetrating agent, a dissolution stabilizer, an anti-drying agent, an antioxidant, a viscosity adjustor, a pH adjuster, a neutralizer, and an antifungal agent may be blended as necessary in addition to the surfactant.

### [Examples]

Inks were prepared and evaluated as Examples 1 to 4 of the present disclosure. In the following, the content common to Examples 1 to 4 will be described, and then, the individual content of each of Examples 1 to 4 will be described.

### (Preparation of ink)

In Examples 1 to 4, first, a pigment dispersion liquid including the pigment a dispersed in water was prepared. The pigment dispersion liquid was prepared by blending the pigment a, the pigment dispersion resin c, sodium hydroxide, OLFINE (registered trademark) E1010, and water such that the content shown in Table 1 was achieved.

**(Table 1)**

| Component | Content (mass%) |
|---|---|
| Pigment a | 15 |
| Pigment dispersion resin c | 6.0 |
| Sodium hydroxide | 0~1.0 |
| OLFINE E1010 | 0.5 |
| Water | Remainder |

Sodium hydroxide was blended as a neutralizer for neutralizing the pigment dispersion resin c. OLFINE (registered trademark) E1010 is blended as a dispersant for enhancing the dispersibility of the pigment a in the solvent and is a nonionic surfactant manufactured by Nissin Chemical Co., Ltd. In all of Examples 1 to 4, Pigment Blue15:3("LIONOL BLUE FG-7351" manufactured by Toyocolor Co., Ltd.) was used as the pigment a, and ion exchanged water was used as water.

The pigment dispersion liquid was prepared by mixing the above components by wet dispersion using a media-type wet disperser. Examples of the media-type wet disperser include a wet disperser (more specifically, "Nano Grain Mill" manufactured by ASADA IRON WORKS.CO., LTD., "MSC mill" manufactured by NIPPON COKE & ENGINEERING. CO., LTD., "DYNO (registered trademark)-MILL" manufactured by Shinmaru Enterprises Corporation, and the like).

In the wet dispersion using a media-type wet disperser, media (zirconia beads having a diameter of 0.5 mm) were set in a vessel and the ejection rate was controlled to 200 to 600 g/min, thereby adjusting the average particle diameter of the pigment dispersion in which the dispersant has adhered to the pigment a dispersed in water to 90 to 110 nm. The grain size distribution of the pigment dispersion was measured using "Zetasizer Nano" manufactured by Sysmex Corporation with a diluted solution of the pigment dispersion liquid diluted 300 times with ion exchanged water.

Next, inks according to Examples 1 to 4 were prepared. The inks according to Examples 1 to 4 were prepared by blending the above pigment dispersion liquid, surfactant, water-soluble moisturizing agent b, and water such that the content shown in Table 2 was achieved. In all of Examples 1 to 4, OLFINE (registered trademark) E1010 was used as a surfactant.

**(Table 2)**

| Component | Content (mass%) |
|---|---|
| Pigment dispersion liquid | 53.3 |
| Surfactant | 0.5 |
| Water-soluble moisturizing agent b | 30 |
| Water | Remainder |

In the preparation of inks according to Examples 1 to 4, the components shown in Table 2 were added in order while stirring the solvent using a stirrer. Further, each ink after stirring was filtered using a filter having a pore size of φ5 µm to remove foreign substances, dirt, coarse particles, and the like.

### (Evaluation of ink)

For the inks according to Examples 1 to 4, the dispersion stability and the image density were evaluated.

### ·Method of evaluating dispersion stability

In the evaluation of dispersion stability, for the pigment dispersion that is a complex of the pigment dispersion resin c adsorbed on the pigment a, the particle size before and after drying treatment was measured. In the drying treatment, 10 g of the ink was placed in IBOY, and the solvent component was evaporated until the ink in the IBOY was reduced to 6 g. The ratio of the change in particle size of the pigment dispersion before and after drying treatment to the particle size of the pigment dispersion before drying treatment was calculated. The calculated ratio was used as an evaluation value for the dispersion stability of each ink. Using the evaluation value for the dispersion stability of each ink, evaluation was performed in accordance with the following criteria A and B. Inks with the evaluation for the dispersion stability of A are evaluated to "Pass", and inks with the evaluation of B are evaluated to "Fail".
A (Good): 10% or less
B (Poor): exceeding 10%

### ·Method of evaluating image density

In the evaluation of image density, an inkjet recording apparatus (line type, manufactured by KYOCERA Document Solutions Inc.) was used as a tester. In the tester, the drive voltage was set such that the amount of ink to be ejected from one recording head was 12 pL. Using the tester, a solid image of 10 cm × 10 cm was formed on a recording medium ("Vitality" manufactured by Xerox Corporation). The recording medium on which the image was formed was left to stand for 12 hours, and then, the image density of the solid image formed on the recording medium was measured using a spectrodensitometer (FD-5, manufactured by Konica Minolta, Inc.). Inks with the image density of 1.3 or more were determined to "Pass" and inks with the image density of less than 1.3 were determined to "Fail".

### (Example 1)

In Example 1, ink samples 1 to 5 were prepared by the above method using benzylmethacrylate (BzMMA)/methacrylic acid (MAA) copolymers (BzMMA: 64 mass%, MAA: 36 mass%, the acid value: 160 mg KOH/g) having various different weight average molecular weights and molecular weight distributions as the pigment dispersion resin c, and the above evaluation was performed on the samples 1 to 5. Note that in all of the samples 1 to 5 according to Example 1, 3-methyl-1,5-pentanediol (log Kow: 0.35) was used as the water-soluble moisturizing agent b.

Table 3 shows the weight average molecular weight and molecular weight distribution of the pigment dispersion resin c used in the samples 1 to 5 and the evaluation results of dispersion stability and image density for the samples 1 to 5. In all of the samples 2 to 4, favorable evaluation results for both dispersion stability and image density were obtained. On the other hand, in the sample 1 in which the pigment dispersion resin c has a narrow molecular weight distribution, the dispersion stability was determined to "Fail". This is presumably because in the sample 1, molecules having a large molecular weight and high adsorption force on the pigment a in the pigment dispersion resin c were insufficient. Further, in the sample 5 in which the pigment dispersion resin c has a large molecular weight and the pigment dispersion resin c has a wide molecular weight distribution, the image density was determined to "Fail". This is presumably because in the sample 5, molecules having a small molecular weight and weak adsorption force on the pigment a in the pigment dispersion resin c were insufficient.

**(Table 3)**

| No. | Pigment dispersion resin c | | Evaluation result | |
|---|---|---|---|---|
| | Weight average molecular weight | Molecular weight distribution | Dispersion stability | Image density |
| 1 | 11000 | 1.8 | B | 1.32 |
| 2 | 12000 | 2.2 | A | 1.31 |
| 3 | 19000 | 3.4 | A | 1.32 |
| 4 | 19500 | 4.8 | A | 1.31 |
| 5 | 21000 | 5.2 | A | 1.27 |

### (Example 2)

In Example 2, ink samples 6 to 9 were prepared by the above method using the pigment dispersion resin c having different hydrophobic segments and hydrophilic segments, and the above evaluation was performed on the samples 6 to 9. In the sample 6, a BzMMA/MAA copolymer was used as the pigment dispersion resin c. In the sample 7, a BzMMA/acrylic acid (AA) copolymer was used as the pigment dispersion resin c. In the sample 8, a styrene (St) /MAA copolymer was used as the pigment dispersion resin c. In the sample 9, a St/AA copolymer was used as the pigment dispersion resin c. The acid value of the pigment dispersion resin c in the samples 6 to 9 is 160 mg KOH/g. Note that in all of the samples 6 to 9 according to Example 2, 3-methyl-1,5-pentanediol (log Kow: 0.35) was used as the water-soluble moisturizing agent b.

Table 4 shows the hydrophobic segment and the hydrophilic segment of the pigment dispersion resin c used in the samples 6 to 9 and the evaluation results of dispersion stability and image density for the samples 6 to 9. In the sample 6, favorable evaluation results for both dispersion stability and image density were obtained. Meanwhile, in the samples 8 and 9 in which the hydrophobic segment of the pigment dispersion resin c is not benzylmethacrylate, dispersion stability was determined to "Fail". Further, in the samples 7 and 9 in which the hydrophilic segment of the pigment dispersion resin c is not methacrylic acid, image density was determined to "Fail".

**(Table 4)**

| No. | Pigment dispersion resin c | | | Evaluation result | |
|---|---|---|---|---|---|
| | Hydrophobic segment | Hydrophilic segment | Molecular weight distribution | Dispersion stability | Image density |
| 6 | BzMMA | MAA | 2.7 | A | 1.32 |
| 7 | BzMMA | AA | 2.6 | A | 1.25 |
| 8 | St | MAA | 2.8 | B | 1.32 |
| 9 | St | AA | 2.9 | B | 1.23 |

### (Example 3)

In Example 3, ink samples 10 to 14 were prepared by the above method using BzMMA/MAA copolymers having various different weight average molecular weights as the pigment dispersion resin c, and the above evaluation was performed on the sample 10 to 14. Note that in all of the sample 10 to 14 according to Example 3, 3-methyl-1,5-pentanediol (log Kow: 0.35) was used as the water-soluble moisturizing agent b.

Table 5 shows the weight average molecular weight and molecular weight distribution of the pigment dispersion resin c used in the sample 10 to 14, and the evaluation results of dispersion stability and image density for the samples 10 to 14. In all of the samples 11 to 13, favorable evaluation results for both dispersion stability and image density were obtained. On the other hand, the sample 10 in which the molecular weight of the pigment dispersion resin c was small was evaluated to "Fail" for dispersion stability. This is presumably because in the sample 10, molecules having strong adsorption force on the pigment a and a large molecular weight in the pigment dispersion resin c were insufficient. Further, in the sample 14 in which the molecular weight of the pigment dispersion resin c is large, the image density was evaluated to "Fail". This is presumably because in the sample 14, molecules having weak adsorption force on the pigment a and a small molecular weight in the pigment dispersion resin c were insufficient.

**(Table 5)**

| No. | Pigment dispersion resin c | | Evaluation result | |
|---|---|---|---|---|
| | Weight average molecular weight | Molecular weight distribution | Dispersion stability | Image density |
| 10 | 8,000 | 2.3 | B | 1.32 |
| 11 | 11,000 | 2.4 | A | 1.33 |
| 12 | 21000 | 2.4 | A | 1.32 |
| 13 | 30000 | 2.3 | A | 1.31 |
| 14 | 32000 | 2.3 | A | 1.26 |

### (Example 4)

In Example 4, samples 15 to 23 were prepared using water-soluble moisturizing agents b having various different log Kows, and the above evaluation was performed on the samples 15 to 23. Note that in all of the samples 15 to 23 according to Example 4, a BzMMA/MAA copolymer was used as the pigment dispersion resin c.

Table 6 shows the material name and log Kow of the water-soluble moisturizing agent b used in the samples 15 to 23, and the evaluation results of dispersion stability and image density for the samples 15 to 23. In all of the samples 21 to 23 in which the log Kow of the water-soluble moisturizing agent b is 0 or more, favorable evaluation results for both dispersion stability and image density were obtained. On the other hand, in all of the samples 15 to 20 in which the log Kow of the water-soluble moisturizing agent b is less than 0, the image density was evaluated to "Fail". This is presumably because in the samples 15 to 20, the effect of promoting the agglomeration of the pigment a on the recording medium by the water-soluble moisturizing agent b could not be obtained.

**(Table 6)**

| No. | Water-soluble moisturizing agent b | | Evaluation result | |
|---|---|---|---|---|
| | Material name | log Kow | Dispersion stability | Image density |
| 15 | Glycerin | -1.76 | A | 1.22 |
| 16 | Triethylene glycol | -1.75 | A | 1.25 |
| 17 | Dipropylene glycol monopropyl ether | -1.53 | A | 1.26 |
| 18 | Diethylene glycol | -1.47 | A | 1.27 |
| 19 | Triethylene glycol monomethyl ether | -1.46 | A | 1.28 |
| 20 | Ethylene glycol | -1.36 | A | 1.27 |
| 21 | 3-methyl-1,5-pentanediol | 0.35 | A | 1.35 |
| 22 | Triethylene glycol monobutyl ether | 0.44 | A | 1.34 |
| 23 | 1,2-pentanediol | 0.01 | A | 1.31 |

## Claims

1. An inkjet ink, comprising:
a pigment;
a water-soluble moisturizing agent having a log Kow of 0 or more;
a benzylmethacrylate/methacrylic acid copolymer having a weight average molecular weight of 10,000 or more and 30,000 or less and a molecular weight distribution of 2.2 or more and 5.0 or less; and
water.
